# EUROPÄISCHE PATENTANMELDUNG

(11) **EP 2 320 171 A2**
(43) Veröffentlichungstag der Anmeldung: **11.05.2011**
(21) Anmeldenummer: 10013689.4
(22) Anmeldetag: 15.10.2010
(51) Int. Cl.: F25C 5/00

(54) **Wagen zur Aufnahme von abzutauendem Eis**

(30) Priorität: 19.10.2009 DE 202009014153 U
(71) Anmelder: Hilberer, Franz, 78234 Engen (DE)
(72) Erfinder: Hilberer, Franz, 78234 Engen (DE)
(74) Vertreter: Arat, Dogan

(57) **Zusammenfassung**

Die Erfindung betrifft einen Wagen zur Aufnahme von abzutauendem Eis mit einer Wanne und einem Heizelement.

## Beschreibung

### TECHNISCHES GEBIET

Die vorliegende Erfindung betrifft einen Wagen zur Aufnahme von abzutauendem Eis mit einer Wanne.

### STAND DER TECHNIK

Im Stand der Technik finden sich verschiedenartige Vorrichtungen und Transprostvorrichtungen, die jeweils verschiedene Aufgaben lösen.

So ist aus der DE 20 2009 002 582 U 1 eine Vorrichtung zum Beschicken eines Kühltresens mit Eis. Diese Vorrichtung soll es dem Nutzer vereinfachen in die meist über 1 m hohen Fischauslagen Eis zu verbringen. Diese Vorrichtung zeichnet sich daher durch eine Aufnahme oberhalb einer Arbeitshöhe des Kühltresens aus, wobei die Aufnahme unter anderem mindestens einseitig einen Einfüllabschnitt aufweist, der in einer dem Kühltresen benachbarten Beschickposition den Kühltresen mindestens teilweise überragt.

Daneben sind aus der DE 20 2009 001 970 U1 ein Transportbehälter für Speisen bekannt, welcher sich dadurch kennzeichnet, dass in einem Gehäuse mehrere Tabletts einschiebbar sind, auf denen Teller oder Schalen mit den Speisen isoliert abgestellt sind.

In Auslagen von Fisch- oder Meeresfrüchtetheken wird für die Präsentation und gleichzeitige Kühlung Eis genutzt. Dieses Eis darf aus hygienischen Gründen nur eine relativ kurze Zeit genutzt werden, bevor es entsorgt werden muss. Die Entsorgung des genutzten Eises hat sich in der Praxis als äusserst schwierig herausgestellt. Da das Eis in den Theken zusätzlich gekühlt wird, schmilzt es nur zu einem sehr geringen Anteil während der Nutzungszeit in den Theken.

Nach der Nutzung fällt somit sehr viel Eis an, das nicht ohne weiteres entsorgt werden kann. So ist es bspw in der Praxis vorgekommen, dass das Eis direkt in die Kanalisation oder auf Kanaldeckel in der Nähe von Supermärkten gekippt wurde. Dies führte zu einer erheblichen Geruchsbelästigung und ist ausserdem nicht zulässig, da es zu einer erhöhten Rattenzuwanderung führt.

### OFFENBARUNG DER ERFINDUNG

Aufgabe der Erfindung ist es einen Wagen zu schaffen, der es dem Nutzer ermöglicht, in Fisch- oder Meeresfrüchtetheken genutztes und somit durch Fischreste oder Fischgeruch und damit einhergehender bakterieller Belastung kontaminiertes Eis möglichst einfach zu entsorgen. Weitere Aufgabe ist es ausserdem, dass der Nutzer hierbei möglichst geringe körperliche Arbeit aufwenden muss und die Entsorgung fachgerecht erfolgen kann.

Die Aufgabe wird mit einem Wagen nach Anspruch 1 gelöst.

Bevorzugt weist der Wagen zwei bis vier eventuell festlegbaren Rollen, einen Rohrrahmen und eine Wanne auf. Vorteilhaft hierbei ist der Umstand, dass eine Wanne besonders gut zur Aufnahme von Eis geeignet ist. Der Rohrrahmen verleiht dem Wagen die notwendige Stabilität für die Aufnahme von grösseren Mengen Eis und die Rollelemente dienen dazu den Wagen möglichst einfach von einer Stelle zur anderen zu befördern, wobei die Rollen vorteilhafterweise teilweise festlegbar sind, um ein Wegrollen zu verhindern.

In einem weiteren bevorzugten Ausführungsbeispiel verfügt diese Wanne über einen aufklappbaren und völlig entfernbaren Deckel. Vorteilhaft hierbei ist, dass die aufgebrachte Heizenergie nicht über einen offene Seite der Wanne entweichen kann.

Bevorzugt weist ein solcher erfindungsgemässer Wagen ein Heizelement auf. Dieses Heizelement kann in einer Wand des Wagens integriert sein oder aber auch auf einer Innen- oder Aussenwand einer Wanne des Wagens aufgeklebt angebracht sein. Vorteil hierbei ist, dass das Heizelement ohne grössere Wärmeverluste die aufgebrachte Enerige an das zu schmelzende Eis abgeben kann.

Als besonders vorteilhaft hat sich hierbei erwiesen, dass das Heizelement in Form eines Folienheizkörpers auf der Unterseite der Wanne aufgeklebt ist. Dies hat den Vorteil, dass die Integrität der Wanne praktisch nicht verletzt wird und die Heizenergie direkt in das Innere der Wanne abgegeben werden kann.

In einem bevorzugten Ausführungsbeispiel weist der erfindungsgemässe Wagen einen an seiner Unterseite angebracht Abflusseinrichtung auf. Diese Abflusseinrichtung kann sich auch auf den Seiten der Wanne befinden. Ebenso ist es denkbar, dass die Wanne kippbar auf dem Wagen angeordnet ist und die Abflusseinrichtung, darin besteht, dass die Wanne ausgeleert wird. Vorteil hierbei ist, das abgetautes Eis möglichst einfach aus der Wanne entfernt werden kann.

In einem bevorzugten Ausführungsbeispiel weist die Abflusseinrichtung einen Hebel auf. Dieser Hebel soll in der Regel eine Öffnung freigeben, die in einer Wandung der Wanne eingelassen ist. Sollte die oben beschriebene kippbare Anordnung vorhanden sein, so soll der Hebel dazu dienen, die Wanne möglichst einfach in Kipplage zu verbringen.

Bevorzugt weist ein Ausführungsbeispiel eines erfindungsgemässen Wagens eine Kontrolleinheit auf, die das Heizelement ansteuert und über Einrichtungen, wie Thermostat, Zeitschaltuhr, Uhrfunktion verfügt, die einzeln oder in Kombination vorhanden sein können. Vorteil hierbei ist, dass das Überhitzen des Heizelements oder die Dauer der Tätigkeit kontrolliert werden kann.

In einem bevorzugten Ausführungsbeispiel ist die Kontrolleinheit über ein Kabel mit einer Stromquelle verbunden. Daneben ist aber auch denkbar, dass eine Energiequelle, wie Batterien oder Solarzellen, direkt in der Kontrolleinheit oder am Wagen vorhanden sind. Vorteil an einer Kabelverbindung zu einer Stromquelle ist eine gesicherte Versorgung des Kontrollelements oder des Heizelements mit Energie. Vorteil an einer integrierten Energiequelle ist der Umstand, der noch grösseren Flexibilität.

Bevorzugt soll ausserdem ein Halteelement vorhanden sein, dass dazu dient ein vorhandenes Kabel aufgerollt zu halten. Vorteil hierbei ist, dass der Wagen, wenn er fortbewegt wird, nicht über ein herumliegendes Kabel behindert wird.

In einem bevorzugten Ausführungsbeispiel weist ein erfindungsgemässer Wagen einen Griff auf, der dazu dient, den Wagen möglichst einfach durch einen Nutzer von einer Stelle zu einer anderen Stelle zu schieben oder zu ziehen.

### KURZE BESCHREIBUNG DER ZEICHNUNGEN

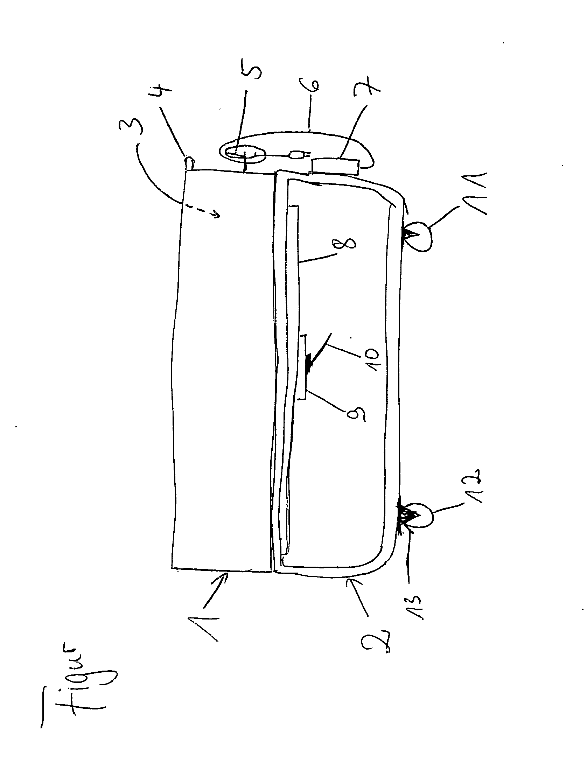

Die Erfindung wird anhand beiliegender Zeichnung eingehender erläutert, wobei die Zeichnung in Seitenansicht einen erfindungsgemässen Wagen zeigt.

In der Figur ist ein erfindungsgemässer Wagen gezeigt. Dieser weist eine Wanne 1 und einen Rohrrahmen 2 auf. Die Wanne 1 ist auf der Einlassseite 3 offen ausgeführt.

Ausserdem ist ein Griff 4 gezeigt. Unterhalb des Griffs 4 ist ausserdem ein Halteelement 5 zu sehen. An diesem Halteelement 5 ist ein aufgewickeltes Kabel 6 gezeigt, welches wiederum mit einer Kontrolleinheit 7 verbunden ist. Diese Kontrolleinheit 7 ist an dem Rohrrahmen 2 angebracht.

Unterhalb derWanne 1 ist das Heizelement 8 zu erkennen. Ausserdem ist dort die Abflusseinrichtung 9 zu sehen, welche mit einem Hebel 10 verbunden ist.

Auf der Unterseite des Rohrrahmens 2 ist ausserdem ein Rollelement 11 zu sehen, welches drehbar am Rohrrahmen angeordnet ist, um den Wagen einfacher lenken zu können. Ausserdem ist ein Rollelement 12 zu sehen, welches über eine Sperreinrichtung 13 festgelegt und entsperrt werden kann.

## Patentansprüche

1. Wagen zur Aufnahme von abzutauendem Eis mit einer Wanne,
**gekennzeichnet durch**
ein Heizelement.

2. Wagen nach Anspruch 1, **dadurch gekennzeichnet, dass** das Heizelement an einer Wandung der Wanne angebrachter Folienheizkörper ist.

3. Wagen nach Anspruch 1 oder 2, **gekennzeichnet durch** eine Abflusseinrichtung.

4. Wagen nach Anspruch 3, **dadurch gekennzeichnet, dass** die Abflusseinrichtung über einen Hebel eine Öffnung der Wanne freigibt.

5. Wagen nach einem der vorherigen Ansprüche, **gekennzeichnet durch** eine zur Steuerung des Heizelementes geeigneten Kontrolleinheit.

6. Wagen nach Anspruch 5, **dadurch gekennzeichnet, dass** die Kontrolleinheit ein Kabel zur Verbindung mit einer Stromquelle aufweist.

7. Wagen nach einem der vorherigen Ansprüche, **gekennzeichnet durch** festlegbare Rollelemente.

8. Wagen nach einem der vorherigen Ansprüche, **gekennzeichnet durch** ein zum Halten eines Kabels geeignetes Halteelement.

9. Wagen nach einem der vorherigen Ansprüche, **dadurch gekennzeichnet, dass** der Wagen zur Nutzung an eine Theke heranfahrbar, mit abzutauendem Eis beladbar und anschliessend zum Abtauen das Heizelement betätigbar ist, wobei nach dem Abtauen das Wasser ablassbar ist.

10. Verwendung eines Wagens nach einem der Ansprüche 1 bis 9, **dadurch gekennzeichnet, dass** der Wagen in folgender Weise verwendet wird:
- Verbringen des Wagens an die Fisch- oder Meeresfrüchtetheke;
- Füllen des Watens mit dem benutzten Eis;
- Verbringen des Wagens von der Fisch- oder Meeresfrüchtetheke;
- Inbetriebnahme des Heizelementes;
- Ablassen des Wassers nach dem Abtauprozess durch die Abflusseinrichtung.
